# EUROPEAN PATENT APPLICATION

(11) **EP 2 508 689 A2**
(43) Date of publication of application: **10.10.2012**
(21) Application number: 12155279.8
(22) Date of filing: 14.02.2012
(51) Int. Cl.: E04D 11/02, E04D 13/16

(54) **Insulating panel structure, particularly for the thermal insulation of a roof or of a wall of a building**

(30) Priority: 07.04.2011 IT TV20110006 U
(71) Applicant: Silcart S.p.A., 31030 Carbonera, Frazione Mignagola TV (IT)
(72) Inventor: Faotto, Ugo, 31100 Treviso (IT)
(74) Representative: Modiano, Micaela Nadia

(57) **Abstract**

Insulating panel structure (1), particularly for the thermal insulation of a roof (2) or of a wall (3) of a building; the panel structure is coupled, during the manufacturing step, or can be coupled, by way of adhesives, at at least one side thereof, to a roll-up multilayer adhesive support (5).

## Description

The present application relates to an insulating panel structure, particularly for the thermal insulation of a roof or of a wall of a building.

The roof or the covering of a building can be constituted, starting from the inside outward, for example by a first wood boarding 100 or by a concrete floor 101, by a water vapor barrier 102, the purpose of which is to prevent the passage of water vapor originating from the lower layers of the building and the subsequent condensation thereof within the upper layers, by a layer of insulation 103 for increasing the heat insulation, by a waterproofing breathable membrane 104 for protecting the underlying panel 103, by one or more ventilation layers constituted by a second wood boarding 105 supported on adapted battens 106, by a waterproofing sheet 107 for protecting the planking and by a covering mantle 108 of flat or barrel roof tiles.

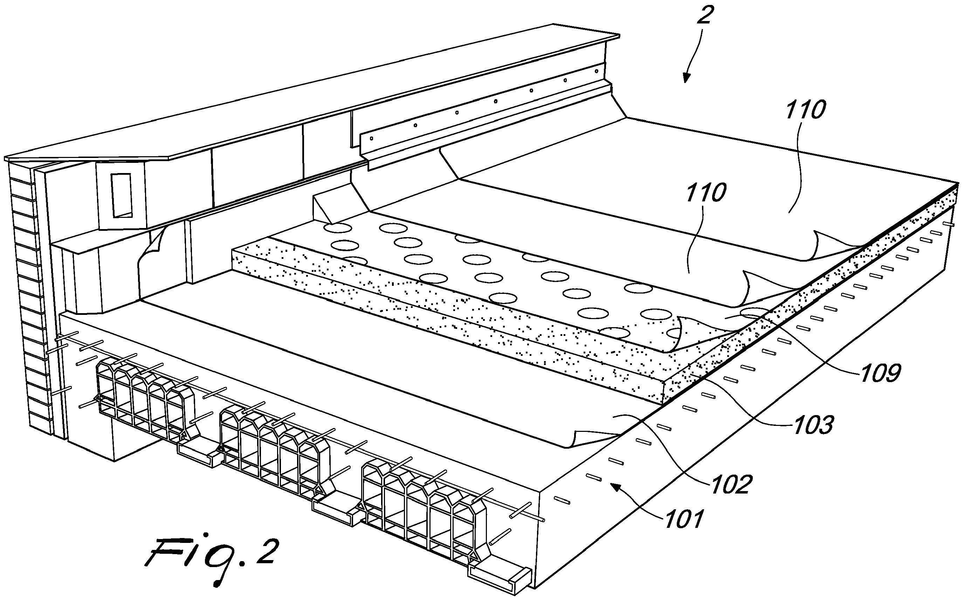

For a flat concrete roof, illustrated in Figure 2, the waterproofing breathable membrane 104, the ventilation layer and the covering mantle 108 are generally substituted by a bituminous sheath 109, 110.

The layer of insulation 103 is applied and fixed in different ways and is then wedged and held in place between two battens 106, or by means of primer or adhesive substances sprayed on the water vapor barrier 102, or with nails and perforation of the water vapor barrier 102, with consequent reduction of the insulating properties of the layer of insulation 103.

In an upper region with respect to the insulation layer 103, waterproofing sheaths 110 or sheets (underlay) are applied by way of mechanical fixing, by way of adhesive substances or with blowtorching of the bitumen.

A further example of application is the insulation of a cavity wall 111 in which the layer of insulation 103 is inserted at an interspace.

The layer of insulation 103 is usually constituted by an insulation panel for construction.

In conventional roofs the method of laying the insulating panels has the drawback of being complicated and expensive.

Research and development of insulating materials has in fact led to an improvement in materials in favor of products with a cellular structure which are generally synthetic expanded products (expanded polystyrene, styrene, polyurethane).

Insulators with a cellular structure have a low average thermal conductivity λ [W m⁻¹ K⁻¹] due to their structure, only 3-5% of which by volume is made up of the polymer and which surrounds, in closed cells, a gaseous phase of expanding agents which make up 97-95% of the volume.

The small quantity of polymer and the gaseous phase limit thermal conduction, while the small size of the closed cells limits thermal convection between the gas and the internal surface of the cells.

Nowadays, expanded polyurethane is often used because, since it has an average thermal conductivity λ lower than other commercial insulators (and thus is a better insulator), it makes it possible to obtain a good thermal insulation while using thinner panels.

The types of insulating panels containing PUR (polyurethanes) or PIR (polyisocyanurates) are produced with different types of faces, for example using sheets of aluminum coupled, with thin layers of glue, to sheets of paper, bitumen fiberglass membrane, mineralized fiberglass membrane, bitumen paper and feltpaper.

This type of panel exhibits, in addition to non-trivial installation and the use of mechanical fixings, the drawback of possible perforation of the panels or the water vapor barrier caused by the mechanical fixings.

The aim of the present invention is to solve the above-mentioned technical problems, eliminating the drawbacks in the cited known art, by providing a structure that offers simple laying operations for a quick installation.

Within this aim, an object of the invention is to provide a structure that makes it possible to avoid the use of mechanical fixings.

Another object is to obtain a structure that can be temporarily fixed to a wall during the construction of cavity walls.

Another object of the invention is to avoid the perforation thereof and of the barrier sheet or water vapor barrier during laying.

Another object of the invention is to obtain optimal waterproofing without having to resort to blowtorching operations or the use of adhesive substances.

Another object of the invention is to reduce the problems of joining between panels and thus reduce the sound bridges.

Another object is to obtain a structure that offers optimal resistance to being walked on and to abrasion, in particular during the operations of laying and fixing.

Another object of the invention is to be capable of being coupled with other insulating materials, thermal and/or acoustic.

Another object is to provide a structure that is low-cost.

This aim and these and other objects which will become more evident hereinafter are achieved by an insulating panel, particularly for the thermal insulation of a roof or of a wall of a building, which is **characterized in that** it is coupled, during the manufacturing step, or can be coupled, by way of adhesives, at at least one side thereof, to a roll-up multilayer adhesive support.

Further characteristics and advantages of the invention will become more apparent from the detailed description of a particular embodiment, illustrated by way of non-limiting example in the accompanying drawings wherein:

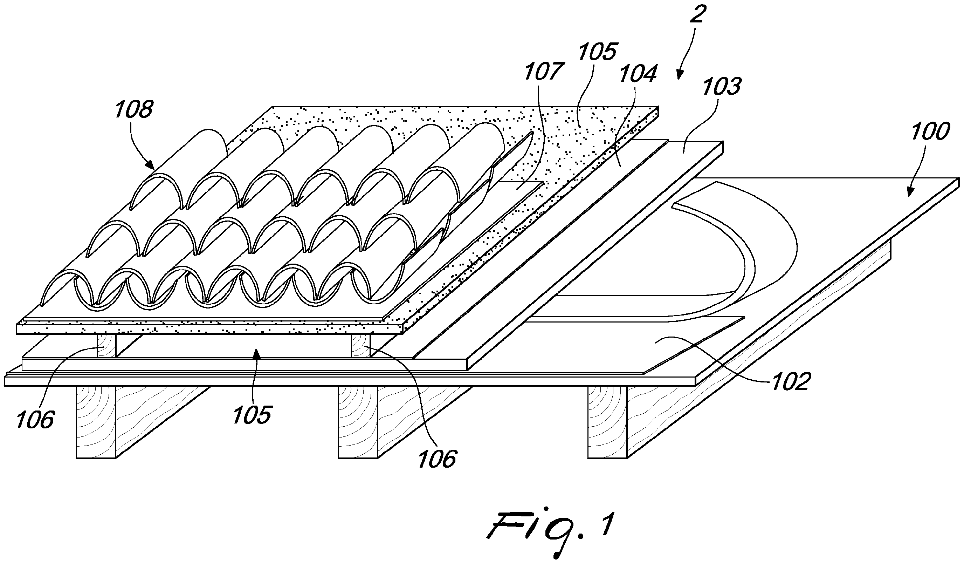

Figure 1 is a schematic view of a covering of a building with a supporting structure made of wood;
Figure 2 is a schematic view of a covering of a building with a concrete floor supporting structure;

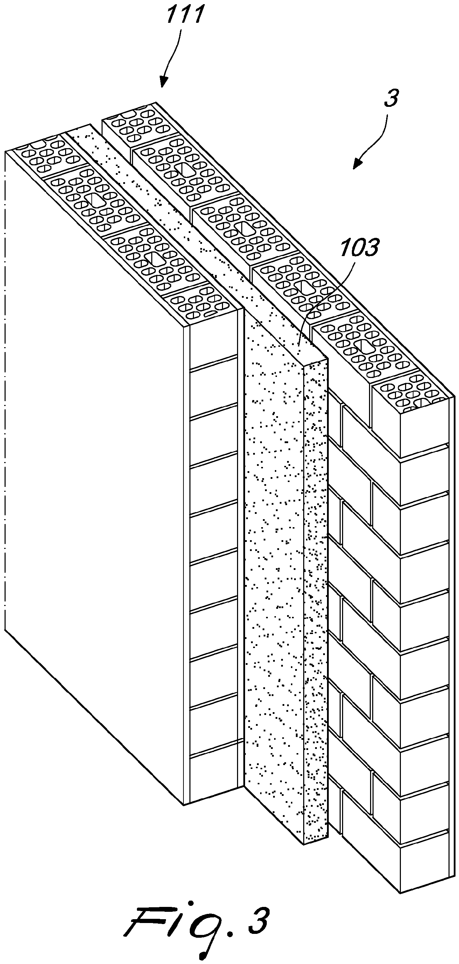

Figure 3 is a schematic view of an application of the invention on a wall;

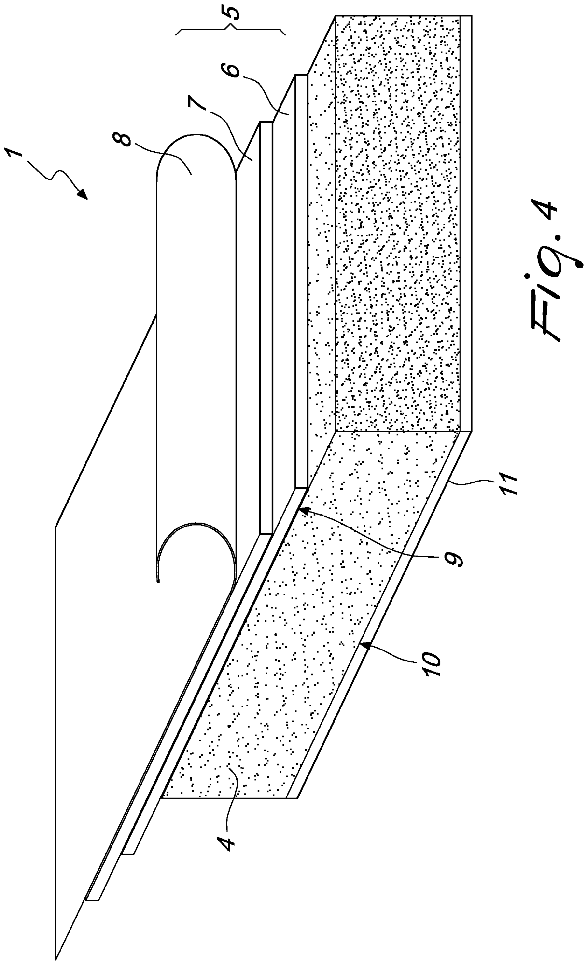

Figure 4 is a perspective view of the invention;
Figures 5, 6 and 7 are schematic views of the stratification of the invention in various types of application to the supporting structure of a roof.

With reference to the figures, the reference numeral 1 generally designates an insulating panel structure, particularly for the thermal insulation of the roof 2 or of a wall 3 of a building.

The panel structure 1 is constituted by a layer 4 obtained by the foaming of polyurethane or other polymers.

The panel structure 1 is coupled or can be coupled to a roll-up multilayer adhesive support 5 that is constituted by a support made of fiberglass 6 and by a pre-pasted bituminous mixture 7.

The roll-up multilayer adhesive support 5 is coupled to a siliconized removable film 8 for protecting the pre-pasted bituminous mixture.

The support made of fiberglass 6 has a basis weight of approximately (40-120) g/m².

The support made of fiberglass 6 is provided with treatments or finishings that are adapted to increase the compatibility thereof with insulating materials, the support made of fiberglass 6 being capable of being subjected to a hydrophobic or hydrophilic or fire-retardant treatment or to a treatment for surface activation.

The roll-up multilayer adhesive support 5 can also be applied on the insulating panel structure 1 during manufacture of the panel and thus during the foaming of the layer 4 of polyurethane.

The side, or surface, 9 of the support made of fiberglass 6 that is not coupled to the pre-pasted bituminous mixture 7 thus acts as a support for the foaming of polyurethane, of other polymers or for containing mineral or fibrous insulators so as to confer dimensional stability.

The side, or surface, 10 of the layer 4 not affected by the roll-up multilayer adhesive support 5 can be finished with another roll-up multilayer adhesive support 5, so as to obtain an insulating panel structure in which both surfaces, upper and lower, are provided with adhesive properties.

Alternatively the side 10 of the layer 4 not affected by the roll-up multilayer adhesive support 5 can be finished with a material 11 such as bitumen paper, bitumen fiberglass membrane or mineralized fiberglass membrane.

With regard to the pre-pasted bituminous mixture 7, the bituminous adhesive elastomer compound can have the following composition, by way of non-limiting example, in which the following abbreviations are used: LDPE (low density polyethylene), HDPE (high density polyethylene), SBS (styrene-butadiene-styrene) :

### EXAMPLE

distilled bitumen (penetration 100-400 dmm): (40-80)%

naphthenic or paraffinic oil: (1-6)%

SBS: (10-30)%

PE (LDPE and/or HDPE): (2-5)%

Tackifying resins (aromatic, colophonic, solid and/or liquid): (2-10)% CaC03: (5-15)%

Some non-limiting examples follow:

### EXAMPLE 1

Distilled bitumen: 63%

Oil: 5%

SBS: 20%

LDPE: 1%

HDPE: 1%

Resins: 5% CaC03: 5%

### EXAMPLE 2

Distilled bitumen: 66%

Oil: 3%

SBS: 11%

LDPE: 3%

HDPE: 2%

Resins: 5%

CaC03: 10%

### EXAMPLE 3

Distilled bitumen: 64%

Oil: 4%

SBS: 13%

LDPE: 3%

HDPE: 3%

Resins: 3%

CaC03: 10%

### EXAMPLE 4

Distilled bitumen: 57%

Oil: 4%

SBS: 15%

LDPE: 3%

HDPE: 1%

Resins: 5%

CaC03: 15%

These are the characteristic parameters of the bituminous adhesive compound:
Ball & ring test: (90-140)°C (this is the index of resistance to high temperatures of the bituminous mixture) ASTM D36-95 standard
Penetration: (this is the index of plasticity and ductility of the bituminous compound): (20-80) dmm, ASTM D5-05A standard

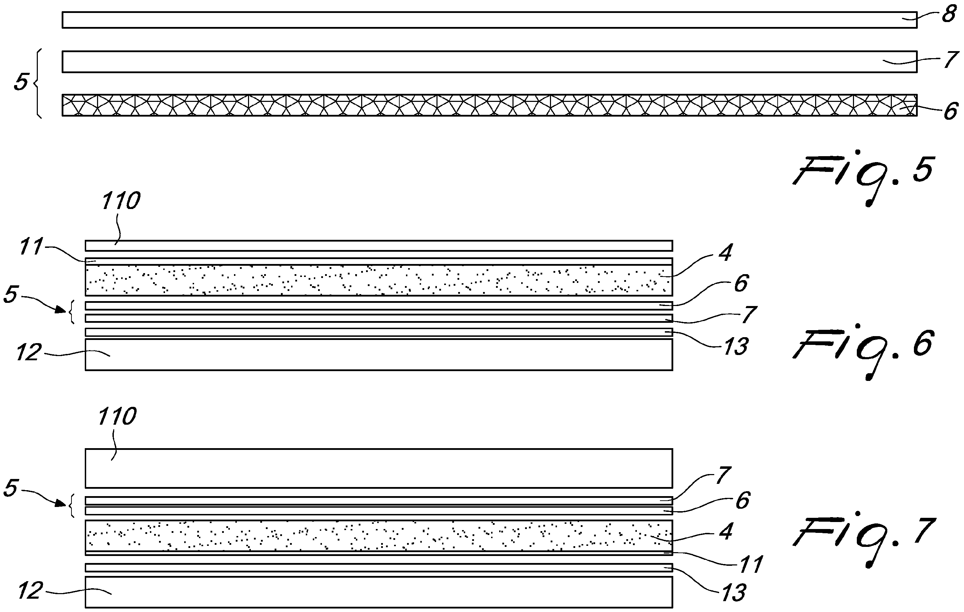

The invention thus makes it possible to eliminate the above-mentioned drawbacks in the known art, an insulating panel structure being obtained with adhesive properties that simplify the laying operations by making it possible to fix the panel structure to the supporting structure 12 of the roof or to the water vapor barrier layers 13 if the adhesive surface is directed downward, thus avoiding mechanical fixings that could reduce the insulation properties of the panel and perforate the water vapor barrier, as shown in Figure 6.

It is moreover possible to perform a temporary fixing of the invention to the wall during the construction of cavity walls, thanks to the presence of the pre-pasted bituminous mixture 7.

It is also possible to apply waterproofing sheaths 110 or sheets (underlay) for continuous coverage on the insulating panel structure, with the adhesive face directed upward, without resorting to blowtorching operations or the use of adhesive substances.

Moreover, it is possible to position sound insulation over the invention arranged with the adhesive face directed upward, without having to apply adhesive substances on site, also reducing the problems of junction between panels and, as a consequence, sound bridges.

It is also possible to associate other insulations or jackets, rigid or fibrous, on site during the laying or after the production of the invention in order to obtain combined panels with better thermal and/or acoustic insulation performance.

Finally it is possible to provide already at the time of production thereof, without the necessity of applying adhesives at another time or performing second processing cycles, a multifunctional platform that is suitable both for the laying of the invention and the adhesion thereof to supporting structures (walls or roofs), and also for the coupling of the invention with other materials useful for the thermal and/or acoustic insulation of buildings.

Obviously the materials used as well as the dimensions constituting the individual components of the invention can be more pertinent to specific requirements.

The various means for effecting certain different functions shall not in any way coexist only in the illustrated embodiment, but may be present per se in many embodiments, even if not illustrated.

The characteristics indicated as advantageous, convenient or similar may also be missing or be substituted by equivalent characteristics.

The disclosures in Italian Utility Model Application No. TV2011U000006 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An insulating panel structure (1), particularly for the thermal insulation of a roof (2) or of a wall (3) of a building, **characterized in that** it is coupled, during the manufacturing step, or can be coupled, by means of adhesives, at at least one side thereof, to a roll-up multilayer adhesive support (5).

2. The structure according to claim 1, **characterized in that** said roll-up multilayer adhesive support (5) is constituted by a support made of fiberglass (6), by a pre-pasted bituminous mixture (7) and by a siliconized removable film (8) for protecting said pre-pasted bituminous mixture (7).

3. The structure according to claim 1, **characterized in that** said roll-up multilayer adhesive support (5) is constituted by a support made of fiberglass (6) and by a pre-pasted bituminous mixture (7).

4. The structure according to claims 1, 2 or 3, **characterized in that** said support made of fiberglass (6) has a basis weight of approximately 40-120 g/m²_{.}

5. The structure according to claims 2 or 3, **characterized in that** said support made of fiberglass (6) is provided with treatments or finishings that are adapted to increase the compatibility thereof with insulating materials.

6. The structure according to claims 2 and 5, **characterized in that** said support made of fiberglass (6) is subjected to a hydrophobic or hydrophilic or fire-retardant treatment or to a treatment for surface activation.

7. The structure according to one or more of the preceding claims, **characterized in that** said roll-up multilayer adhesive support (5) is applied on said insulating panel structure during the manufacturing step of said panel, the side, or surface (9), of said support made of fiberglass (6) that is not coupled to said pre-pasted bituminous mixture (7) acting as a support for the foaming of a layer (4) of polyurethane, of other polymers or for containing mineral or fibrous insulators so as to confer dimensional stability to said insulating panel structure.

8. The structure according to one or more of the preceding claims, **characterized in that** the side, or surface (10), of said layer (4) not affected by said roll-up multilayer adhesive support (5) is finished with another roll-up multilayer adhesive support (5), so as to obtain an insulating panel structure in which both surfaces, upper and lower, are provided with adhesive properties.

9. The structure according to one or more of the preceding claims, **characterized in that** the side (10) of said layer (4) not affected by said roll-up multilayer adhesive support (5) is finished with a material (11) such as bitumen paper, bitumen fiberglass membrane or mineralized fiberglass membrane.

10. The structure according to one or more of the preceding claims, **characterized in that** in relation to said pre-pasted bituminous mixture (7), the bituminous adhesive elastomer compound is constituted by distilled bitumen (penetration 100-400 dmm) (40-80)%, by naphthenic or paraffinic oil (1-6)%, by SBS (10-30)%, by PE (LDPE and/or HDPE) (2-5)%, by tackifying resins (aromatic, colophonic, solid and/or liquid) (2-10)%, by CaC0₃ (5-15)%.

11. The structure according to one or more of the preceding claims, **characterized in that** in relation to said pre-pasted bituminous mixture (7), the bituminous adhesive elastomer compound is constituted by distilled bitumen 63%, by oil 5%, by SBS 20%, by LDPE 1%, by HDPE 1%, by resins 5%, by CaC0₃ 5%.

12. The structure according to one or more of the preceding claims, **characterized in that** in relation to said pre-pasted bituminous mixture (7), the bituminous adhesive elastomer compound is constituted by distilled bitumen 66%, by oil 3%, by SBS 11%, by LDPE 3%, by HDPE 2%, by resins 5%, by CaC0₃ 10%.

13. The structure according to one or more of the preceding claims, **characterized in that** in relation to said pre-pasted bituminous mixture (7), the bituminous adhesive elastomer compound is constituted by distilled bitumen 64%, by oil 4%, by SBS 13%, by LDPE 3%, by HDPE 3%, by resins 3%, by CaC0₃ 10%.

14. The structure according to one or more of the preceding claims, **characterized in that** in relation to said pre-pasted bituminous mixture (7), the bituminous adhesive elastomer compound is constituted by distilled bitumen 57%, by oil 4%, by SBS 15%, by LDPE 3%, by HDPE 1%, by resins 5%, by CaC0₃ 15%.

15. The structure according to one or more of the preceding claims, **characterized in that** in relation to said pre-pasted bituminous mixture (7), the bituminous adhesive elastomer compound has an index of resistance to high temperatures of the bituminous mixture (ball & ring test) of (90-140)°C.

16. The structure according to one or more of the preceding claims, **characterized in that** in relation to said pre-pasted bituminous mixture (7), the bituminous adhesive elastomer compound has an index of plasticity and ductility of (20-80) dmm.
